Europäisches Patentamt

European Patent Office

Office européen des brevets

(19)

(11) Publication number: 0 096 219
A2

# (12) EUROPEAN PATENT APPLICATION

(21) Application number: 83104296.5

(22) Date of filing: 02.05.83

(51) Int. Cl.³: H 04 N 1/40

(30) Priority: 07.06.82 US 385749

(43) Date of publication of application:
21.12.83 Bulletin 83/51

(84) Designated Contracting States:
DE FR GB

(71) Applicant: International Business Machines
Corporation
Old Orchard Road
Armonk, N.Y. 10504(US)

(72) Inventor: Kunzinger, Charles Anthony
Rt. 1 Box 138A
Morrisville, NC 27560(US)

(72) Inventor: Lasher, Dana Alfred
8613 Caswell Ct.
Raleigh, NC 27612(US)

(72) Inventor: Steltzenmuller, William Karl
Rt. 1, Box 125
Morrisville, NC 27560(US)

(74) Representative: de Pena, Alain
COMPAGNIE IBM FRANCE Département de Propriété
Industrielle
F-06610 La Gaude(FR)

(54) Image classification method based on histogram analysis.

(57) A method is described for classifying a document as bilevel or continuous gray scale for the purpose of selecting a compression algorithm for efficient transmission and/or storage of the digitized image of that document.

After the document has been at least partially scanned with a gray scale video camera and digitized pel values have been stored, a pel distribution table or histogram is formed. The histogram is analyzed to determine whether there is a peak region having at least 50% of the total number of pels. If there is not, the document is classified as continuous gray scale. If such a region is found, tail (T) and tail factor (TF) values are computed. The relative magnitudes of these values and the algebraic sign of the T value are used to classify the scanned document as continuous gray scale, white on black or black on white. Once the document is classified, an optimum data compression algorithm can be selected.

FIG. 1

## IMAGE CLASSIFICATION METHOD BASED
## ON HISTOGRAM ANALYSIS

### Technical Field

The present invention relates to telecommunications and more particularly to a method for automatically classifying video images and selecting appropriate data compression algorithms.

### Background

Because of rising travel costs, there is increasing interest in the use of teleconferencing systems for the conduct of business meetings. In a typical teleconferencing system, people in different cities or even countries meet in special teleconferencing rooms. Each room normally includes a room camera for capturing a wide angle view of the people, a document camera which can be focussed on letters, drawings or other documents, a room monitor for permitting people in one room to see those in the other, and a document monitor for viewing documents being presented in the other room. Communications between the two rooms are carried over conventional teleprocessing links, such as leased or switched telephone lines or satellite communication links.

To reduce communications costs, freeze-frame teleconferencing systems are employed. In such systems, the video image captured by a room camera is updated only periodically, perhaps on the order of once every 30 seconds. People at the receiver will see the same room image for 30 seconds between updates. Audio signals are transmitted on a "real time" basis so that there is no significant delay in verbal communications. Video images captured by a document camera are not updated automatically. Instead, a document is scanned and transmitted only when a person in the transmitting room pushes a Send button on a control console.

Documents to be scanned may be categorized as full scale documents or nominally bilevel documents; that is, documents having black characters on a white background or white characters on a black background. To reduce the amount of time and/or bandwidth required to transmit the data needed to reproduce scanned documents on a monitor at a remote teleconferencing room, various data compression techniques are used. The techniques or algorithms are optimized for certain types of images. An optimum data compression algorithm for a gray scale image is substantially different than an optimum compression algorithm for a bilevel image. If both gray scale and bilevel documents are to be transmitted, as would normally be necessary for a business meeting, and if an optimum algorithm is to be selected to minimize transmission delay and/or bandwidth, some technique must be employed to classify the document. One technique would be to place the document classification responsability on the meeting participants by requiring that an operator classify the document and position a switch accordingly.

This is undesirable for several reasons. Teleconferencing is a business tool for conducting business meetings and should place a minimum operating burden on u: ~rs. Also, different people will classify the same documents differently. Finally, in the intensity of a business meeting, participants may forget to change a switch which could cause the smooth flow of the meeting to be disrupted at a critical time. For these reasons, functions which can reasonably be controlled by image processing equipment, such as document classification, should be automated.

There are known methods for selecting appropriate image processing algorithms as a function of sensed characteristics of the image. For example, U.S. patent US-A-4,251,837, discloses a method for selecting a thresholding algorithm for use in a facsimile copier that makes printed copies of mixed bilevel/ gray scale documents. As the document is being scanned, a gradient constant is established to reflect the rate of change of documents reflectance along the line of scan. The mode in which the copier operates (and the algorithms employed) are a function of the range of values into which the established gradient constant falls.

While the method disclosed in that patent is considered highly appropriate in its intended use, it is through to be somewhat more complex than desirable for a teleconferencing application.

### Summary of the Invention

The present invention is a simple method of automatically categorizing documents as nominally bilevel or gray scale based upon the characteristics of a constructed histogram of captured pel values for either part or all of the document. The present invention is a method of automatically classifying a document as nominally bilevel or as continuous gray scale for use in an image processing system having means for scanning nominally bilevel or continuous gray scale documents, and means for digitizing and storing the captured data wherein the data is stored as pels, each of which has one of a predetermined number of gray scale values, said method being characterized by the steps of :

generating a histogram reflecting the distribution of pel values for a given number of pels constituting at least a representative sample of the captured data;

Analyzing the histogram to determine whether it contains a pel peak region meeting predetermined criteria; and

classifying the scanned document as nominally bilevel or continuous gray scale as a function of the magnitude and location of the identified pel peak region.

## Brief Description of the Drawings

While the specification concludes with claims particularly pointing out and distinctly claiming that which is regarded as the present invention, details of a preferred embodiment of the invention may be more readily ascertained from the following detailed description when read in conjunction with the accompanying drawings wherein :

Figure 1 is a functional block diagram of a teleconferencing installation in which the inventive method may be used;

Figure 2 is a histogram representative of a black on white document;

Figure 3 is a histogram representative of a white on black document;

Figure 4 is a histogram representative of a gray scale document;

Figure 5 is a simplified flow chart of the steps of the inventive method;

Figure 6 is a histogram used to define certain terms occuring in the description; and

Figure 7A and 7B, taken together, are a more detailed flow chart of steps of a preferred embodiment of the inventive method.

## Detailed Description

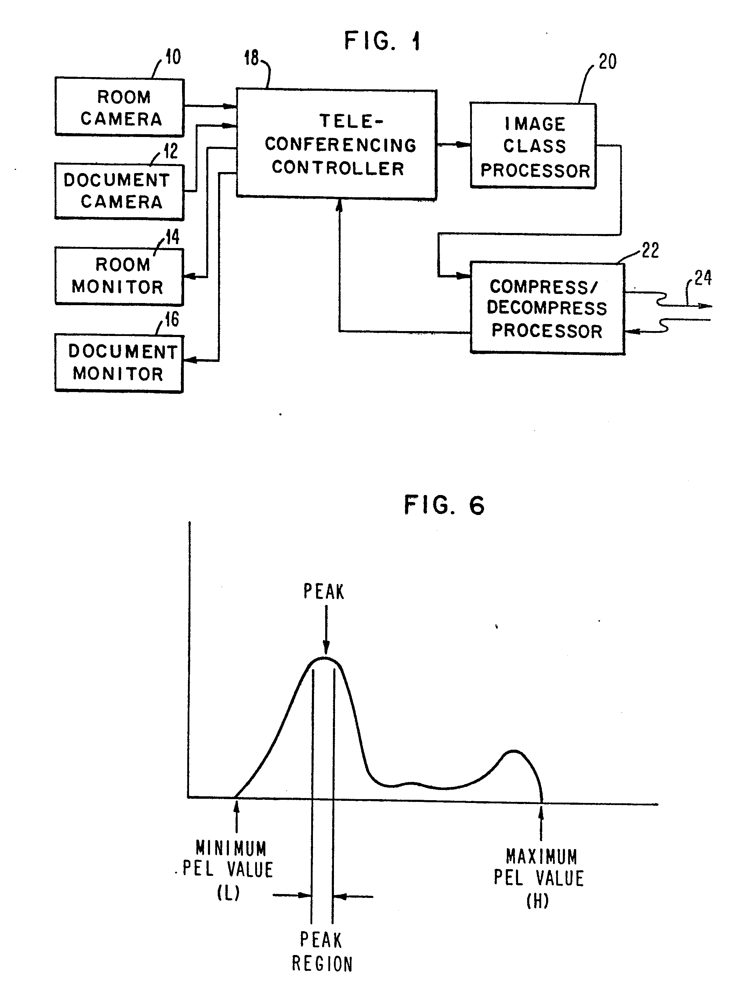

Referring to Figure 1, a typical teleconferencing installation includes a low resolution monochrome room camera 10 for providing a wide angle view of the room and people, a similar document camera 12 which is focussed on surface where letters, drawings, photographs and the like may be placed, a room monitor 14 for providing a black and white video image of the other teleconferencing room and a document monitor 16 for providing a black and white image of any document being sent from the other room. A conventional teleconferencing controller 18 controls the distribution of data to and from the cameras and monitors. Video images captured by at least the document camera 12 are applied to an image classification processor 20 which determines whether the scanned document is black on white, white on black, or continuous gray scale. The manner in which this function is performed is described in greater detail below. The image data is compressed in accordance with a data compression algorithm appropriate for the identified class of document. Data compression and decompression operations, which for purposes of this disclosure are considered to be conventional, occur in a processor 22. The compressed data is transmitted over conventional teleprocessing links 24 to the remote teleconferencing installation.

Those skilled in the art will recognize that Figure 1 does not shown a number of components which would be necessary for the successful implementation of a teleconferencing system. These elements have been omitted from the description since they are not directly relevant to the invention to be described and since conventional components for performing the necessary functions are readily available. Those skilled in the art will also recognize that the system will probably not include a separate image classification processor and a separate compression/decompression processor but would include a single general purpose microprocessor programmed to perform the necessary functions.

The video image data, resulting from the scanning of a document by camera 12 can be digitized and stored in a teleconferencing controller 18, as a plurality of discrete picture elements or pels, each having a particular gray scale value. The number of different values which a pel can have is referred to as the gray scale resolution of the system. A typical system can distinguish between 256 (or $2^8$) levels of gray. The data is captured in analog form and is converted into 8 bit digital words which may range in value, at least theoretically, from 0 (pure white) to 255 (pure black). A histogram is a graph showing the distribution of pels having specific pel values. As will be explained in more detail later, the shape of the histogram can be used to identify or classify the scanned document. As a theoretical illustration, if a document which was 50% pure white and 50% pure black were scanned, the resulting histogram would consist of two lines, each 50 units high. The first line would be at a pel value of 0 representing the pure white portions of the document and the second line would be at a pel value of 255 representing the pure black portions of the document.

In reality, histograms of nominally-bilevel documents are not that simple. Because of variations in shading in both the background and the character areas of the document, these areas appear on the histogram as peak hill-shaped regions. The regions are separated by a "valley" of intermediate gray scale pel values which can be produced by such things as smudges or by pels straddling the boundary between a character and the background.

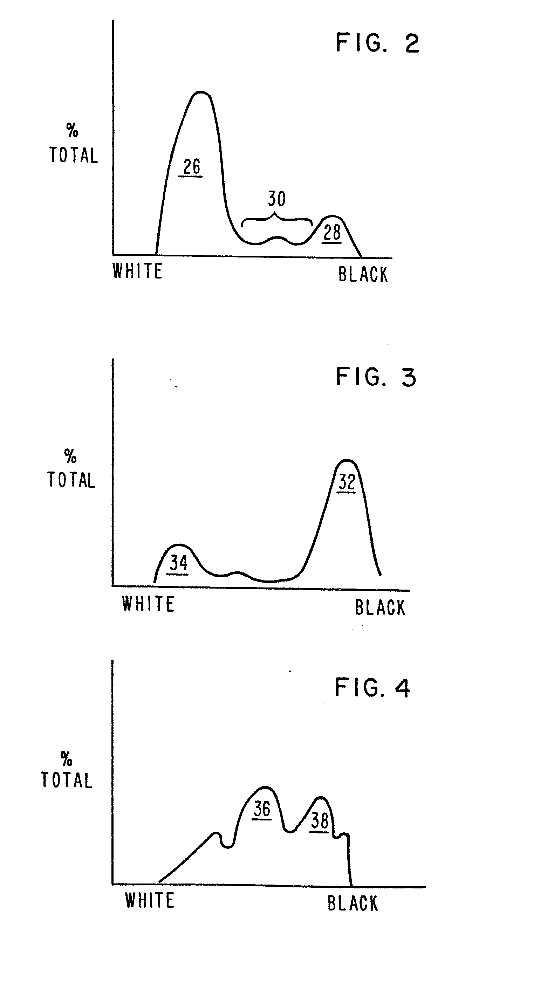

Figure 2 is a histogram of a typical black on white document, such as a typed letter. The histogram has a tall peak 26 near the white end of the pel distribution range and a smaller peak 28 near the black edge of the pel distribution range. The peaks 26 and 28 are linked by an intermediate region 30. The pel values in peak region 26 result from scanning of the background areas of the document while pel values in peak region 28 result from scanning of the character areas. The pel values in the intermediate range 30 result from scanning of smudges, extraneous marks and transitions between the background and character areas.

Figure 3 is a histogram for a typical white on black document. The largest peak 32 is near the black edge of the histogram while a smaller peak 34 is adjacent the white edge of a histogram.

It will be noted that a histogram for either kind of nominally bilevel document includes one major peak located near one edge of the histogram. This is in contrast to histograms for continuous gray scale documents. One such histogram is shown in Figure 4. There is no single histogram truly representative of all kinds of continuous gray scale documents. Gray scale document histograms may have one or more major peaks, such as peaks 36 and 38, but these peaks are not ordinarily located near either the black or the white edge of the histogram.

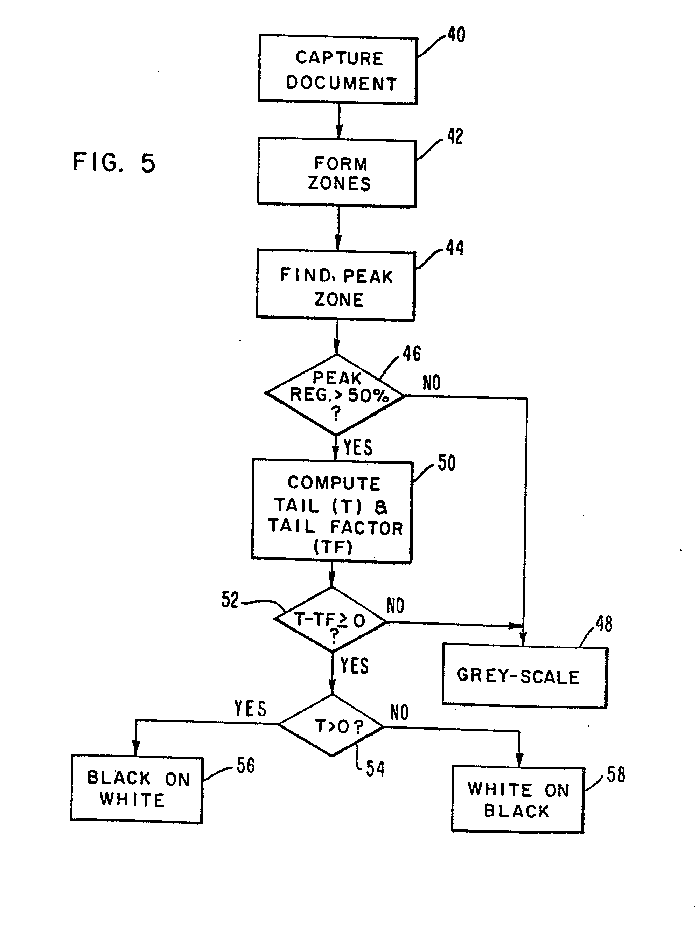

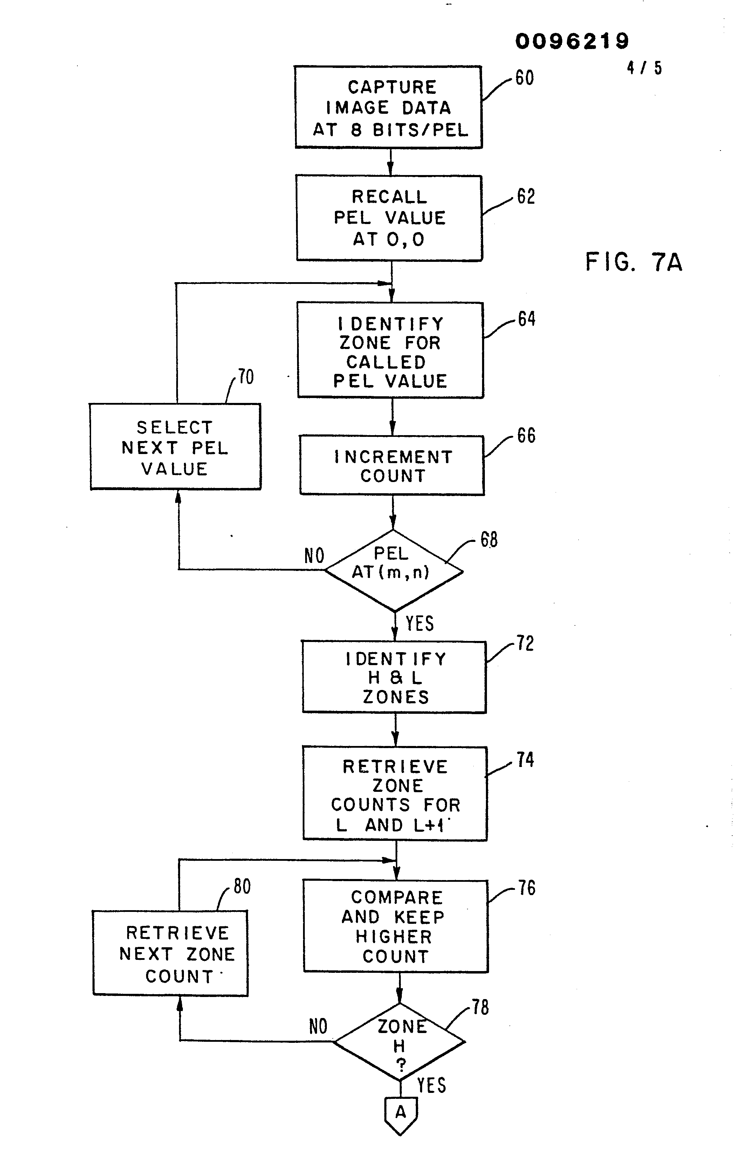

The method described briefly with reference to Figures 5 and 6 allow scanned documents to be classified as white on black, black on white or continuous gray scale as a function of the shape of the histogram.

Referring to Figure 5, the document classification process can begin only after a video image of all or a representative sample of the document has been captured (operation 40) by scanning with a freeze frame video system capable of differentiating between a given number of different levels of gray. As has been mentioned before, a typical system can distinguish between 256 ($2^8$) levels of gray in a scanned image. To simplify the document classification process, the pels are grouped into adjacent zones and the pel values within each of the zones are summed to provide a single zone value. In a preferred embodiment, the 256 possible different pel values are combined into 64 adjacent zones with each zone value being defined as the sum of the individual pel values within the zone. For example, zone 0 would include the total number of pels having values 000 - 003. Zone 1 would include a total number of pels having values of 004 - 007 and so on through zone 64 which would include the total number of pels having values of 252 - 255.

Certain terms are used in the description of the method. These terms are defined by reference to the histogram shown in Figure 6. The term PEAK identifies the zone containing the greatest number of pels in the histogram. The term PEAK REGION refers to a summation of the number of pels in both the PEAK zone and a limited number of zones on either side of the PEAK zone. The lowest zone containing any pels, representing the whitest sensed area on the document, is identified as the minimum zone number L. The highest zone containing any pels, representing the blackest sensed area, is identified as the maximum zone number H.

After the zones have been formed, the PEAK zone is found (operation 44). Once the peak zone has been identified, the numbers of pels in that zone and the four most closely adjacent zones are summed to define the PEAK REGION and a check is made (operation 46) to determine whether the PEAK REGION total is greater than 50% of the total number of pels in the histogram. If the number of pels in the PEAK REGION is not greater than 50%, the scanned document is assumed to be a continuous gray scale document and the program branches (operation 48) to an appropriate gray scale algorithm.

If, however, the number of pels in the PEAK REGION is greater than 50% of the total number of pels, quantities identified as a tail (T) value and a tail factor (TF) value must be computed (operation 50) in accordance with equations 1 and 2 below :

$$T = (H - PEAK) - (PEAK - L) \qquad \text{Eq. (1)}$$
$$TF = K1 (H - L) - K2 \qquad \text{Eq. (2)}$$

where

H = highest zone with a pel,

L = lowest zone with a pel,

PEAK = single zone having greatest number of pels, and K1 and K2 are empirically derived constants.

The magnitude of T is a measure of the proximity of the PEAK zone to an edge of the histogram. The magnitude of TF is a measure of the width of the histogram or of the contrast between the light and dark areas of the document being scanned. The constants in the tail factor equation are empirically derived from observations of a considerable number of business documents. Good results have been obtained by setting K1=0.5 and K2=22.

When T and TF have been computed the two quantities are compared (operation 52). If the peak zone is near the center of the histogram distribution, the absolute magnitude of T will be less than the magnitude of TF. The scanned document will be then classified as continuous gray scale and the program will select (operation 48) the appropriate gray scale compression algorithm.

If the absolute magnitude of T is greater than or equal to TF, however, a further decision (operation 54) is required to determine whether the nominally bilevel document is black on white or white on black. If T is greater than 0, the document is classified as a black on white document and the program branches (operation 56) to an appropriate algorithm for that type of document. Conversely, if T is negative, the document is classified as white on black and the program branches to another appropriate algorithm (operation 58).

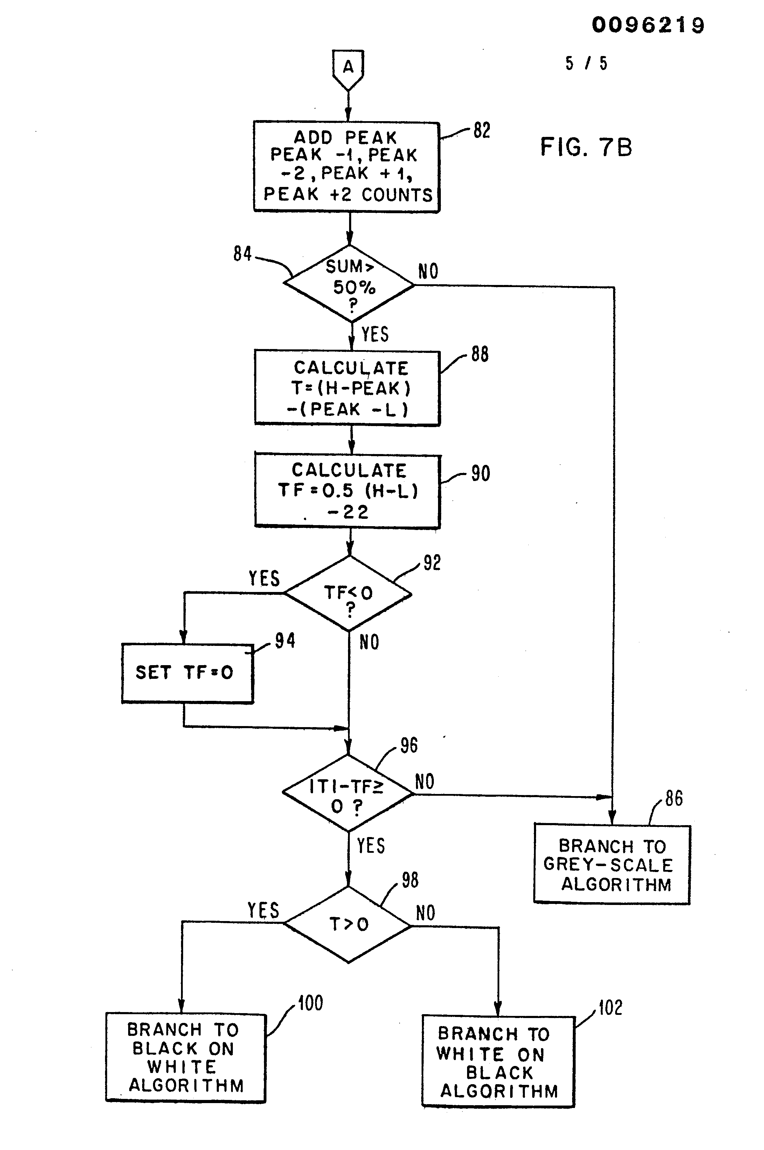

The process described briefly with reference to Figure 5 is described in more detail with reference to Figure 7A and 7B. As mentioned earlier, the image data is captured (operation 60) by scanning the document with a system capable of disting- nishing between 256 levels of gray. Thus, each pel is defined by 8 bits of data. The image classification process does not necessarily require that the entire document be captured before the process begins. For example, only those pels in the top quarter or third of the document might be used in the image classification process, the assumption being that the remaining portion of the document would not substantially differ from the sample area. Alternately, pels in every fourth
line in the image data might be used.

Beginning with the first pel in the sample (row 0, column 0 of
the sample) the value of the pel is recalled (operation 62)
and the process of forming the histogram is begun. A simple
divide by 4 and round down or a table lookup process is used
(operation 66) to determine which of the 64 zones (zone 0
through zone 63) the pel at location 0, 0 should be placed.
When the zone has been identified, the pel count for that zone
is incremented (operation 66) and a check is made (operation
68) as to whether all pels in the sample buffer have been
recalled. Obviously, the result of that check will be negative
when only the first pel has been recalled. Then the next pel,
which may be the pel at row 0 and column 1, is selected
(operation 70) and operations 64, 66, and 68 are repeated.
When the last pel in the sample buffer (the pel at row m,
column n) has been recalled, the histogram is complete. The
histogram consists of 64 discrete values, each representing
the total number of pels in one of the zones.

When the histogram has been constructed, the highest (H) and
lowest (L) zones having any pels are identified (operation 72)
and the process of identifying the P AK zone is initiated. The
counts for zones L and L+1 in the histogram are retrieved
(operation 74). The two counts are compared (operation 76) and
the larger of the two is retained along with data identifying
the zone in which this count was found. A check is then made
(operation 78) as to whether zone H in the histogram has been
checked. If zone H has not been checked, the count for the
next zone (L+2) is retrieved (operation 80) and compared to
the count retained after the previous operation 76. The loop
consisting of operations 76, 78 and 80 is continued until zone
H is checked. The zone having the count retained after the
last iteration of operation 26 is labeled the PEAK zone. In
operation 82 the pel count in the PEAK zone is summed with the
pel counts in the next two lower zones (PEAK - 1, PEAK - 2)
and with the pel counts in the next two higher zones (PEAK + 1, PEAK + 2). These ranges form the PEAK REGION. A check is made as to whether the sum of the pels in the PEAK REGION is greater than or equal to 50% of the total number of pels in the histogram.

If the PEAK REGION contains less than 50% of the total number of pels, the document is classified as a continuous gray scale document and the program branches (operation 82) to an appropriate gray scale algorithm.

If the PEAK REGION contains at least 50% of the total number of pels, the tail (T) value is calculated (operation 88) along with the tail factor (TF) value (operation 90). If the computed value of TF is found to be less than zero in a check 92, TF is set to zero in operation 94 and the program returns to the input of operation 96. Otherwise, the program goes directly to operation 96. In this operation, the absolute magnitude of T is compared to TF. If TF is greater than T, indicating a peak region near the center of the histogram, the document is classified as a continuous gray scale document and an appropriate gray scale algorithm is selected.

If it is determined in operation 96 that the absolute magnitude of T is greater than or equal to TF, another decision (operation 98) is made to determine whether T is greater than zero. If T is found to be greater than zero, the document is classified as a black on white nominally bilevel document and an appropriate black on white algorithm is selected in an operation 100. If T is zero or less, the document is considered to be white on black and an algorithm appropriate for that type of document is selected in an operation 102.

Once the appropriate data compression algorithm has been selected by the method defined in Figures 7A and 7B, taken together, the image data can be processed by processor function 22 before being transmitted to a remote location. The actual application of the data compression algorithm is not considered part of the present invention and therefore is not described.

While there has been described what is considered to be a preferred embodiment of the present invention, variations and modifications in that embodiment will occur to those skilled in the art once theybecome acquainted with the basic concepts of the invention. Therefore, it is intended that the appended claims shall be construed to include not only the preferred embodiment but all such variations and modifications as fall within the true spirit and scope of the invention.

CLAIMS

1. A method of automatically classifying a document as nominally bilevel or as continuous gray scale for use an image processing system having means for scanning nominally bilevel or continuous gray scale documents, and means for digitizing and storing the captured data wherein the data is stored as pels, each of which has one of a predetermined number of gray scale values, said method being characterized by the steps of :

   generating a histogram reflecting the distribution of pel values for a given number of pels constituting at least a representative sample of the captured data;

   analyzing the histogram to determine whether it contains a pel peak region meeting predetermined criteria; and

   classifying the scanned document as nominally bilevel or continuous gray scale as a function of the magnitude and location of the identified pel peak region.

2. A method as defined in Claim 1 characterized in that it includes the additional step of selecting one of a set of compression algorithms as a function of the image classification.

3. A method as defined in Claim 1 characterized in that adjacent pel values are grouped into zones, each of said zones encompassing a predetermined number of successive pel values and having a magnitude equal to the total number of pels having any one of the encompassed pel values.

4. A method as defined in Claim 3 characterized in that the step of analyzing the histogram to determine whether it contains a pel peak region meeting predetermined criteria comprises the further steps of :

locating the zone having the greatest number of pels;

summing the pel count for at least one zone on each side of the located zone with the pel count for the located zone to establish a peak region pel count; and

determining whether the peak region pel count is equal to or greater than a predetermined percentage of the total number of pels in the histogram.

5.  A method as defined in Claim 4 characterized in that a gray scale data compression algorithm is selected when the peak region pel count is less than the predetermined percentage.

6.  A method as defined in Claim 4 characterized in that it includes the following steps when the peak region pel count exceeds the predetermined percentage :

computing a tail value T and a tail factor value TF in accordance with the equations

$$T = (H - PEAK) - (PEAK - L)$$
$$TF = K1 (H - L) - K2$$

where H is the highest zone number containing any pels, L is the lowest zone number containing any pels, PEAK is the zone number having the greatest number of pelsand K1 and K2 are constants;

selecting a gray scale algorithm when the absolute magnitude of T is less than the magnitude of TF;

determining the algebraic sign of T when the absolute magnitude of T is greater than or equal to TF and selecting either an appropriate black on white algorithm when T is positive or an appropriate white on black algorithm when T is negative.

FIG. 1

ROOM CAMERA `10`

DOCUMENT CAMERA `12`

ROOM MONITOR `14`

DOCUMENT MONITOR `16`

TELE-CONFERENCING CONTROLLER `18`

IMAGE CLASS PROCESSOR `20`

COMPRESS/ DECOMPRESS PROCESSOR `22`

`24`

FIG. 6

PEAK

MINIMUM PEL VALUE (L)

MAXIMUM PEL VALUE (H)

PEAK REGION

FIG. 2

%
TOTAL

26

30

28

WHITE          BLACK

FIG. 3

%
TOTAL

32

34

WHITE          BLACK

FIG. 4

%
TOTAL

36    38

WHITE          BLACK

FIG. 5

FIG. 7A

FIG. 7B

A

ADD PEAK
PEAK -1, PEAK
-2, PEAK +1,
PEAK +2 COUNTS — 82

84 — SUM >
50%
?

NO →

↓ YES

CALCULATE
T=(H-PEAK)
-(PEAK -L) — 88

CALCULATE
TF=0.5 (H-L)
-22 — 90

YES ← TF<0
? — 92

↓ NO

SET TF=0 — 94

|T|-TF≥
0 ? — 96

NO →

↓ YES

YES ← T>0 — 98 NO →

BRANCH TO
GREY-SCALE
ALGORITHM — 86

BRANCH TO
BLACK ON
WHITE
ALGORITHM — 100

BRANCH TO
WHITE ON
BLACK
ALGORITHM — 102